# EUROPEAN PATENT APPLICATION

(11) **EP 4 745 947 A1**
(43) Date of publication of application: **20.05.2026**
(21) Application number: 25209939.5
(22) Date of filing: 21.10.2025
(51) Int. Cl.: G09G 3/00, G02B 30/24, G02B 30/33, H04N 13/32, H04N 13/341, H04N 13/368, H04N 13/30

(54) **PSEUDO-HOLOGRAPHIC DISPLAY USING COLLIMATED BACKLIGHT AND DYNAMIC BEAM STEERING**

(30) Priority: 13.11.2024 US 202418946137
(71) Applicant: Distance Technologies Oy, 00530 Helsinki (FI)
(72) Inventor: Strandborg, Mikko, 00530 Helsinki (FI)
(74) Representative: Moosedog Oy

(57) **Abstract**

For a given region of a liquid crystal display (LCD) device (102) and a given viewing direction, colour values of an imaginary light ray that originates from at least one virtual object (134) along the given viewing direction and that is to be presented by the given region of the LCD device are determined. This LCD device comprises a backlight unit (108) that is configured to produce collimated light rays (110). A drive signal is generated and sent to control the given region of the LCD device to emit light rays having the colour values of said imaginary light ray. A corresponding portion (104a) of an active optical element (104) arranged on an optical path of the backlight unit is controlled, to direct said light rays along the given viewing direction. The aforesaid steps are repeated for respective ones of different viewing directions (A, B, C, D), by employing temporal multiplexing.

## Description

### TECHNICAL FIELD

The present disclosure relates to systems for facilitating pseudo-holographic displays using collimated backlights and dynamic beam steering. The present disclosure also relates to methods for facilitating pseudo-holographic displays using collimated backlights and dynamic beam steering.

### BACKGROUND

Robust light-field generation is a largely unsolved problem. In the context of the present disclosure, light-field generation refers to a system that is configured to emit light towards one or more users in a manner that the light appears to originate from at least one virtual object with a correct optical distance and parallax effect.

Various different types of holographic displays exist. However, existing holographic displays suffer from several drawbacks. Firstly, a narrow viewing zone (typically, in a range of 10 degrees x 5 degrees to 15 degrees x 10 degrees) is a significant problem in existing holographic displays, impacting an overall user experience and usability. As users move away from an optimal viewing position (that lies within the viewing zone), they experience pronounced ghosting artifacts. This can lead to discomfort and diminishes an overall effectiveness of the existing holographic displays. Secondly, a restricted field of view (typically, in a range of 10 degrees x 5 degrees to 20 degrees x 10 degrees) provided by the existing holographic displays results in only a portion of a three-dimensional (3D) visual scene being visible. This limitation restricts a spatial coverage of the 3D visual scene and reduces immersiveness of a 3D viewing experience of a user. Additionally, a narrow field of view can lead to visual discontinuities, which can be jarring and can disrupt the user's sense of continuity and realism. Thirdly, the existing holographic displays demand substantial computational processing power, leading to high operational costs. This requirement poses challenges for implementation in various applications, particularly where resource efficiency is crucial.

Therefore, in light of the foregoing discussion, there exists a need to overcome the aforementioned problems.

### SUMMARY

The present disclosure seeks to provide a system and a method for facilitating high-quality light-field generation and pseudo-holographic display within a relatively wider viewing zone (for example, in a range of 20 degrees x 20 degrees to 90 degrees x 25 degrees) and with a relatively wider field of view (for example, in a range of 20 degrees x 20 degrees to 60 degrees x 25 degrees, or even more). The aim of the present disclosure is achieved by a system and a method that employ a collimated backlight with an active optical element that facilitates dynamic beam steering, based on relative locations of users, as defined in the appended independent claims to which reference is made to. Advantageous features are set out in the appended dependent claims.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1A depicts a schematic diagram of a system for facilitating a pseudo-holographic display using collimated backlight and dynamic beam steering, in accordance with an embodiment of the present disclosure;
FIG. 1B depicts how temporal multiplexing can be employed in the system, in accordance with an embodiment of the present disclosure;
FIG. 1C depicts a one-directional beam-shaping light diffuser that can be employed in the system to diffuse light rays in a vertical direction, in accordance with an embodiment of the present disclosure;
FIGs. 1D and 1E depict a specific implementation of the system in which viewing directions are determined based on locations of eyes of at least one user, in accordance with an embodiment of the present disclosure;
FIG. 1F depicts an additional implementation of the system, in accordance with an embodiment of the present disclosure;
FIG. 1G depicts an exemplary environment in which the system can be employed, in accordance with an embodiment of the present disclosure; and
FIG. 2 depicts steps of a method for facilitating a pseudo-holographic display using collimated backlight and dynamic beam steering, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, an embodiment of the present disclosure provides a system comprising:
a liquid crystal display (LCD) device comprising a backlight unit that is configured to produce collimated light rays;
an active optical element arranged on an optical path of the backlight unit; and
at least one processor configured to:
   for a given region of the LCD device and a given viewing direction, determine colour values of an imaginary light ray that originates from at least one virtual object along the given viewing direction and that is to be presented by the given region of the LCD device, based on a three-dimensional (3D) model of the at least one virtual object;
   generate a drive signal to control the given region of the LCD device to emit light rays having the colour values of said imaginary light ray;
   send the drive signal to the LCD device; and
   control a corresponding portion of the active optical element, to direct the light rays having the colour values of said imaginary light ray along the given viewing direction,
wherein the step of determining colour values of imaginary light rays, the step of generating drive signals, the step of sending the drive signals and the step of controlling corresponding portions of the active optical element are repeated for respective ones of different viewing directions, by employing temporal multiplexing.

In a second aspect, an embodiment of the present disclosure provides a method comprising:
for a given region of an LCD device and a given viewing direction, determining colour values of an imaginary light ray that originates from at least one virtual object along the given viewing direction and that is to be presented by the given region of the LCD device, based on a 3D model of the at least one virtual object, wherein the LCD device comprises a backlight unit that is configured to produce collimated light rays;
generating a drive signal to control the given region of the LCD device to emit light rays having the colour values of said imaginary light ray;
sending the drive signal to the LCD device; and
controlling a corresponding portion of an active optical element arranged on an optical path of the backlight unit, to direct the light rays having the colour values of said imaginary light ray along the given viewing direction,
wherein the step of determining colour values of imaginary light rays, the step of generating drive signals, the step of sending the drive signals and the step of controlling corresponding portions of the active optical element are repeated for respective ones of different viewing directions, by employing temporal multiplexing.

The present disclosure provides the aforementioned system and the aforementioned method that employ the LCD device having the aforesaid backlight unit along with the active optical element, to direct the light rays having the colour values of said imaginary light ray along the given viewing direction, thereby facilitating dynamic beam steering. The aforementioned steps are performed similarly for individual ones of a plurality of regions of the LCD device, thereby displaying a virtual image of the at least one virtual object for a given viewing position (lying along the given viewing direction). Moreover, these steps are repeated for the respective ones of the different viewing directions, by employing temporal multiplexing, thereby displaying respective virtual images of the at least one virtual object for a plurality of viewing positions (lying along respective ones of the different viewing directions). In other words, emission of light rays (having colour values of a respective one of said imaginary light rays) is synchronised with the dynamic beam steering, to direct the light rays along a respective one of the different viewing directions. This allows for facilitating a pseudo-holographic display having a true 3D light field, thereby allowing the at least one virtual object to be displayed at freely-adjustable optical distances with a true parallax effect even without a need for any head or eye tracking. Moreover, the system and the method are susceptible to be employed for directing light rays along a large number of the different viewing directions, thereby increasing a size of a viewing zone (namely, a 3D zone within which a user's eyes can be positioned) as compared to conventional holographic displays.

Furthermore, as an entirety of a light output of the given region of the LCD device is directed towards the given viewing direction (namely, a single viewing direction) at a given time instant, an overall image brightness of the virtual image is increased. As a result, the system is susceptible to be utilised in various lighting conditions, for example, ranging from bright daylight conditions to dimly-lit night conditions. Notably, the system can be employed to produce legible images even when an outdoor lighting condition is very bright (for example, when the average intensity of ambient light lies in a range of 10000 lux to 25000 lux). This makes the system suitable to be implemented as a heads-up display (HUD). However, it will be appreciated that the system and the method are not limited to be implemented for an HUD merely; that is, the system and the method could be utilised to produce a pseudo-holographic display for other purposes, for example, such as 3D movie viewing, interactive holographic games, animated 3D advertisements, 3D product demos, and 3D visualizations for education and training purposes, to name a few.

Moreover, as an individual one of the plurality of regions of the LCD device is employed to emit light rays for respective ones of the different viewing directions sequentially (namely, by employing temporal multiplexing), whilst dynamic beam steering is employed, crosstalk is reduced significantly. Furthermore, the system and the method allow for facilitating autostereoscopy and multiscopy without a need for any parallax barrier or lenticular array, unlike conventional HUDs. This makes a setup of the system simpler, yet more effective in terms of brightness as well as accuracy, as compared to the conventional HUDs. Pursuant to embodiments, even though a perceived frame rate would be lower as compared to a native refresh rate of the LCD device, a given virtual image is displayed for a given viewing position (lying along a given viewing direction) at a maximum resolution, as compared to the conventional HUDs. As a result, an overall viewing experience of users would still be considerably more realistic and immersive, as compared to the conventional HUDs.

Furthermore, it will be appreciated that there is a trade-off between the size of the viewing zone and a pseudo-holographic effect provided by the pseudo-holographic display. This depends on the native refresh rate of the LCD device as well as a frame rate at which virtual images are to be displayed for a given viewing direction. As an example, the LCD device could have the native refresh rate of 480 Hertz or more, while the frame rate at which the virtual images are to be displayed could be 30 frames per second. In such an example, the light rays could be directed along at least 16 different directions spanning a horizontal dimension of the viewing zone.

In an embodiment, the system further comprises a one-directional beam-shaping light diffuser arranged on an optical path of the LCD device and of the active optical element, wherein the one-directional beam-shaping light diffuser is employed to diffuse the light rays in a vertical direction. By "diffusing in the vertical direction", it is meant that the light rays are diffused along a vertical dimension of the viewing zone. Most importantly, the light rays emitted by regions of the LCD device that lie vertically adjacent to each other are diffused in a manner that they do not overlap with each other upon diffusion. This allows for expanding the viewing zone in which the virtual images are being displayed, without negatively impacting an image quality of the virtual images.

A technical benefit of employing the one-directional beam-shaping light diffuser is that a vertical sweep of the light rays spanning the vertical dimension of the viewing zone can be achieved. This increases visibility of a 3D visual scene presented by the system along the vertical dimension of the viewing zone, whilst retaining an autostereoscopic effect (namely, a horizontal parallax effect) across the viewing zone. Continuing from the above example, this may allow for the size of the viewing zone to lie in a range of 16 degrees x 10 degrees to 20 degrees x 20 degrees, or more.

It will be appreciated that even though employing such a light diffuser could make an optical focus of a given virtual image slightly astigmatic (due to inherent light diffusion in a single direction only), it does not degrade the 3D viewing experience of the user. This is particularly applicable for a case where the LCD device is sufficiently far away (for example, more than 1 metre away) from the user, because at such distances such a slight astigmatism is not noticeable.

For illustration purposes, there will now be described how various components of the aforementioned system can be implemented. Pursuant to embodiments of the present disclosure, the backlight unit is configured to produce collimated light rays. Throughout the present disclosure, the term "collimated light rays" encompasses fully-collimated light rays as well as near-collimated light rays. By "near-collimated light rays", it means that an angle formed by such light rays with respect to a predefined direction of collimation is less than a predefined angle. This predefined angle may, for example, lie within a range of 10 degrees to 30 degrees. The predefined direction of collimation could be along an optical axis of the LCD device. It will be appreciated that the predefined direction of collimation is not limited to the optical axis of the LCD device, and could be any other direction. As the predefined direction of collimation is pre-known, the light rays can be easily directed based on the predefined direction of collimation and the given viewing direction.

It will be appreciated that the backlight unit can be configured to produce collimated light rays in various ways that are well-known in the art. For brevity, some of the various ways will now be described only briefly, without limiting the backlight unit to such implementations only. In a first example implementation, the backlight unit could comprise a plurality of laser light sources and a light guide, wherein the plurality of laser light sources are arranged at one or more edges of the light guide; light rays emitted by the plurality of laser light sources enter the light guide, which then re-directs the light rays to form collimated light rays (namely, a collimated output). In a second example implementation, the backlight unit could comprise a light guide panel (LGP) with integrated microstructures (for example, such as prisms or lenses) and light-emitting diodes (LEDs) arranged at one or more edges of the LGP; light rays emitted by the LEDs enter the LGP, wherein the microstructures redirect the light rays to form collimated light rays (namely, a collimated output). In a third example implementation, the backlight unit could comprise an array of LEDs and an array of collimating lenses arranged on an optical path of the array of LEDs, wherein the collimating lenses are employed to collimate light rays emitted by the LEDs, thereby producing the collimated light rays (namely, a collimated output).

Apart from the backlight unit, the LCD device further comprises:
a liquid crystal (LC) layer comprising a plurality of LC cells;
a linear polarizer arranged on an optical path of the LC layer; and
a drive circuit employed to individually control the plurality of LC cells of the LC layer.

The LC layer is encased between a first substrate and a second substrate. At least one first electrode is deposited on the first substrate and disposed between the LC layer and the first substrate, while a plurality of second electrodes are deposited on the second substrate and disposed between the LC layer and the second substrate. The drive circuit comprises electronic circuit components for controlling respective ones of the plurality of LC cells. These electronic circuit components could be implemented as at least one of: thin-film transistor (TFT) switches, metal-oxide-semiconductor field-effect transistor (MOSFET) switches, programmable resistors, programmable inductors, programmable capacitors. The electronic circuit components are electrically connected to respective ones of the plurality of second electrodes. Each LC cell has a respective electronic circuit component that controls a voltage applied to a respective one of the plurality of second electrodes. The at least one first substrate could be electrically connected to an electrical ground or a common electrical plane.

In some implementations, the backlight unit is configured to emit collimated light rays having a polarization orientation that is different from a polarization orientation of the linear polarizer. As an example, when the backlight unit is implemented using laser light sources, light rays emitted by the laser light sources are typically already polarized. One example of such laser light sources is semiconductor Lasers (for example, such as laser diodes). In such an example, the laser light sources can be configured to emit the collimated light rays having said polarization orientation. Various ways to perform such configuring are well-known in the art.

In other implementations, the LCD device further comprises another linear polarizer having another polarization orientation that is different from a polarization orientation of the linear polarizer, and wherein the LC layer is arranged between the linear polarizer and the another linear polarizer. In such implementations, various components of the LCD device may be arranged as follows:
Backlight unit -> another linear polarizer -> LC layer -> linear polarizer

Moreover, for practical implementations of the system and the method, the LCD device could further comprise a colour filter array (CFA) that is arranged on the optical path of the backlight unit. In such implementations, the LC cells of the LC layer correspond to sub-pixels of a plurality of pixels. The CFA can be arranged anywhere on the optical path. Optionally, the CFA is arranged adjacent to the LC layer, between the LC layer and the linear polarizer. By "adjacent", it is meant that there is a negligible gap between the CFA and the LC layer. A technical benefit of such an arrangement of the CFA is that there is no subpixel light leakage in the LCD device. This eliminates crosstalk (between sub-pixels and pixels), thereby eliminating any ghosting artefacts. However, it will be appreciated that the CFA is not necessary; in a case where there is no CFA in the LCD device, the sets of collimated light rays are produced in monochrome.

Throughout the present disclosure, the term *"active optical element"* refers to an optical element whose individual portions are controllable for actively directing (namely, steering) collimated light rays along a given viewing direction. In some implementations, the active optical element could be implemented as a separate element from the LCD device. In other implementations, the active optical element could be implemented in a form of a layer in the LCD device.

Optionally, the active optical element is implemented as a liquid-crystal (LC) optical element. The LC optical element enables in directing light rays passing therethrough by adjusting a refractive index of an LC material in the LC optical element. In this regard, the refractive index of the LC material can be controlled electrically. Optionally, the LC optical element is implemented as at least one LC layer (encased between substrates). In some implementations, the LC optical element could be implemented as two LC layers. In an example, the LC optical element may be implemented as a switchable LC shutter array. Electrically controlling the LC material to redirect light rays incident thereupon is well-known in the art. A technical benefit of implementing the LC optical element is that the LC material in the LC optical element could be easily and conveniently controlled (electrically) to direct the light rays very precisely, irrespective of any viewing direction.

Alternatively, optionally, the active optical element is implemented using meta elements. As an example, the meta elements can be in a form of phase-change materials (for example, such as chalcogenides) that can be electrically controlled to switch between different optical states, allowing for active control of a phase shift and a bending angle of the light rays. A technical benefit of implementing using the meta elements is that the light rays can be bent to re-direct the light rays along any specific viewing direction.

Throughout the present disclosure, the term "one-directional beam-shaping light diffuser" refers to a light diffuser that diffuses light rays incident thereupon along a single, specific direction (hereinafter referred to as the "direction of diffusion"). This direction of diffusion is fixed for a given light diffuser. In other words, rotating the given light diffuser would rotate the direction of diffusion. As the direction of diffusion is pre-known, the one-directional beam-shaping light diffuser can be easily arranged to align the direction of diffusion with the vertical direction (namely, the vertical dimension of the viewing zone).

The one-direction beam-shaping light diffuser can be beneficially designed to have a high transmittance, thereby allowing for reduction in light wastage. Moreover, it can be beneficially designed to have a wide diffusion angle that lies in a range of 10 degrees to 20 degrees. These technical effects of high transmittance and wide diffusion angle can be achieved by implementing the one-direction beam-shaping light diffuser in various possible ways. As an example, the one-direction beam-shaping light diffuser can be implemented as a light diffuser having a plurality of micro lenses on a surface of the light diffuser. In such a case, the plurality of micro lenses are shaped depending on the diffusion angle. In this regard, a given micro lens is shaped to bend light rays incident thereupon according to the diffusion angle and a location of the given micro lens in the light diffuser. Notably, an angle of bending varies across the light diffuser, such that the angle of bending is larger for those micro lenses that lie in a proximity of a periphery of the light diffuser as compared to other those micro lenses that lie in a central portion of the light diffuser. Moreover, as mentioned earlier, the light rays emitted by vertically-adjacent regions of the LCD device are diffused in a manner that they do not overlap with each other upon diffusion.

The at least one processor controls an overall operation of the system. The at least one processor is communicably coupled to the LCD device and the active optical element (specifically, to a drive circuit of the active optical element). Optionally, the at least one processor is implemented as a processor of the LCD device. Alternatively, optionally, the at least one processor is implemented as a processor of a computing device that is communicably coupled to the LCD device. Examples of the computing device include, but are not limited to, a laptop, a desktop, a tablet, a phablet, a personal digital assistant, a workstation, and a console. Yet alternatively, optionally, the at least one processor is implemented as a cloud server (namely, a remote server) that provides a cloud computing service.

Pursuant to the present disclosure, the given region of the LCD device (similarly, an individual one of the plurality of regions of the LCD device) could correspond to a single pixel or a group of neighbouring pixels of the LCD device. The group of neighbouring pixels could be in a form of a MxN array of pixels. As an example, the MxN array of pixels could be a 2x2 array of pixels, a 3x3 array of pixels, a 1x2 array of pixels, a 2x3 array of pixels, or similar. It will be appreciated that in order to achieve a highest resolution for the pseudo-holographic display, the given region of the LCD device should correspond to a single pixel of the LCD device.

The 3D model of the at least one virtual object could be maintained in a given coordinate system. The given viewing direction (similarly, the different viewing directions) could be represented in the given coordinate system, thereby simplifying calculations. As mentioned earlier, the colour values of the imaginary light ray (that originates from the at least one virtual object along the given viewing direction and that is to be presented by the given region of the LCD device) are determined, based on the 3D model of the at least one virtual object. These colour values of said imaginary light ray could correspond to a single pixel or a group of neighbouring pixels (that correspond to the imaginary light ray) depending on whether the given region of the LCD device corresponds to the single pixel or the group of neighbouring pixels of the LCD device. The colour values of said imaginary light ray could, for example, be in a form of an RGB value, an RGB-A value, a CMYK value, a YUV value, an RGB-D value, an RYYB value, an RGGB value, an RGB-IR value, or similar.

Optionally, the at least one processor is configured to employ at least one of: a ray tracing technique, a ray marching technique, a rasterization-based technique, for determining the colour values of said imaginary light ray. Such techniques are well-known in the art. Optionally, in this regard, the at least one processor is configured to employ at least one neural network for determining the colour values of said imaginary light ray. Optionally, the at least one neural network is implemented as a Neural Radiance Field (NeRF) model. The NeRF model is well-known in the art.

Throughout the present disclosure, the term "virtual object" refers to a computer-generated object (namely, a digital object). Examples of the at least one virtual object may include, but are not limited to, a virtual navigation tool, a virtual gadget, a virtual message, a virtual entity, a virtual entertainment media, a virtual vehicle or a part thereof, and a virtual information. It will be appreciated that the at least one virtual object could be in a form of a replica of at least one real-world object. Optionally, in such case, the 3D model is generated from a plurality of images of the at least one real-world object, based on corresponding camera poses from which the plurality of images are captured. Such techniques for generating the 3D model are well-known in the art.

Throughout the present disclosure, the term "three-dimensional model" of the at least one virtual object refers to a data structure that comprises comprehensive information pertaining to the at least one virtual object. Such a comprehensive information is indicative of at least one of: a plurality of features of the at least one virtual object or its portions, a shape and a size of the at least one virtual object or its portions, a pose of the at least one virtual object or its portions, a material of the at least one virtual object or its portions, a colour and an optical depth of the at least one virtual object or its portions. The 3D model may be generated in the form of a 3D polygonal mesh, a 3D point cloud, a 3D surface cloud, a voxel-based model, or similar. Optionally, the at least one processor is configured to store the 3D model at a data repository that is communicably coupled to the at least one processor. The data repository may be implemented as a memory of the at least one processor, a cloud-based database, or similar.

The term "corresponding portion of the active optical element" refers to a portion of the active optical element that corresponds to the given region of the LCD device. In other words, the corresponding portion of the active optical element lies on an optical path of the given region of the LCD device. Therefore, controlling this corresponding portion of the active optical element allows for direct the light rays having the colour values of said imaginary light ray along the given viewing direction.

Furthermore, optionally, the system further comprises tracking means, wherein the at least one processor is configured to:
determine a relative location of a first eye and a second eye of at least one user with respect to an image plane of the LCD device, by utilising the tracking means; and
determine a plurality of viewing directions from which the at least one virtual object is being viewed by the at least one user, based on the relative location of the first eye and the second eye of the at least one user with respect to the image plane,
wherein the given viewing direction and the different viewing directions are selected from amongst the plurality of viewing directions.

A technical benefit of directing the light rays towards those viewing directions that are determined based on the relative location of the first eye and the second eye of the at least one user with respect to the image plane is that the light output of the LCD device is utilised most optimally. As the light rays are not directed towards other viewing directions along which none of the at least one user's eyes is present, the light output of the LCD device is not wasted. Notably, as the viewing directions are determined based on the relative location of the first eye and the second eye of the at least one user, the light rays are essentially directed towards eyes of the at least one user. This allows for further increasing the size of the viewing zone of the system, depending on the relative location of the eyes of the at least one user (especially in case of multiple users). Accordingly, the size of the viewing zone could be extended beyond the aforementioned range of 16 degrees x 10 degrees to 20 degrees x 20 degrees, to a range of 20 degrees x 20 degrees to 90 degrees x 25 degrees, or even more, as per the relative location of the at least one user's eyes with respect to the image plane.

It will be appreciated that the aforementioned technical benefits can be achieved even when the at least one user is relatively far away (for example, more than 1 metre away) from the system, namely when a distance between the at least one user and the LCD device (along an optical path of the LCD device) is more than 1 metre. By dynamically controlling the active optical element (based on a relative location of a given eye of the at least one user with respect to the image plane), the light rays emitted by the individual ones of the plurality of regions of the LCD device can be directed in a manner that the at least one user perceives an autostereoscopic effect highly realistically and accurately when viewing virtual images being presented to the eyes of the at least one user. This allows for producing the autostereoscopic effect even when the eyes of the at least one user are located relatively far away (for example, more than 1 metre away) from the LCD device, such that an angle formed between gaze vectors of the eyes (when viewing at a same point on a surface of a virtual object) is relatively small (for example, in a range of 2 to 5 degrees, or even smaller). These technical benefits arise from a fact that the light rays (emitted by the individual ones of the plurality of regions of the LCD device) are directed accurately towards the given eye of the at least one user at a given time instant. This is made possible because there is no conventional multiscopic optical element (for example, such as a parallax barrier or a lenticular array) to place any kind of physical barrier or limitation on an optical path of the collimated light rays. Thus, the active optical element allows for freely steering the collimated light rays even at drastic angles, thereby facilitating a wider range of viewing positions of the eyes of the at least one user, even when the at least one user is far away from the LCD device. This makes the system highly suitable for implementation as a 3D HUD.

In some implementations, the at least one user is a single user. In other implementations, the at least one user is a plurality of users. It will be appreciated that the aforementioned steps of the method are performed for each eye of each individual one of the at least one user. Thus, the number of the different viewing directions in the plurality of viewing directions depends on the number of users in the at least one user. Most importantly, the number of the different viewing directions do not necessarily correspond to the number of users. In other words, the number of the different viewing directions is not necessarily a double of the number of users. This is because an eye perceives a virtual image based on different light rays received by different corners (and other parts) of a pupil of the eye. Thus, there could be multiple viewing directions per eye of a given user. Accordingly, the dynamic beam steering could be beneficially performed at a finer granular level, based on a location of the given region within the LCD device. Notably, an entirety of the LCD device spans a certain field of view with respect to the given eye of the individual one of the at least one user. Therefore, in order to display a given virtual image, respective viewing directions for different regions of the LCD device would be different even for the given eye of the individual one of the at least one user.

In this way, the virtual images are displayed for respective eyes of a single user (when the at least one user is the single user), or towards respective eyes of a plurality of users (when the at least one user is the plurality of users). Notably, different virtual images are displayed to different eyes of a given user, thereby presenting the 3D visual scene. Irrespective of whether the at least one user is the single user or the plurality of users, temporal multiplexing is employed. Such temporal multiplexing allows for producing the pseudo-holographic display, whilst increasing an overall image brightness of the 3D visual scene, as the entirety of the light output of the LCD device is directed towards only one of both eyes of an individual one of the plurality of users at a given time instant. As different virtual images for respective ones of different eyes of different users are displayed at different time instants, crosstalk is significantly reduced, thereby eliminating any ghosting artefacts.

It will be appreciated that in a case where the at least one user is the plurality of users, different virtual images for the first eye and the second eye of an individual one of the at least one user may or may not be displayed sequentially. For illustration purposes only, there will now be considered an example case where there are two users A and B. In such a case, the virtual images can be displayed as follows:
One_image_A, Another_image_A, One_image_B, Another_image_B, ... or
One_image_A, One_image_B, Another_image_A, Another_image_B, ... or
One_image_B, One_image_A, Another_image_B, Another_image_A, ... wherein
"One_image_A" represents a virtual image for one of the eyes of the user A,
"Another_image_A" represents another virtual image for another of the eyes of the user A,
"One_image_B" represents a virtual image for one of the eyes of the user B, and
"Another_image_B" represents another virtual image for another of the eyes of the user B.

Throughout the present disclosure, the term *"tracking means"* refers to specialised equipment for detecting and/or following a location of eyes of a given user. The given user encompasses each individual one of the at least one user. Optionally, the tracking means is implemented as at least one tracking camera. The at least one tracking camera may comprise at least one of: at least one visible-light camera, at least one infrared (IR) camera, at least one depth camera. Examples of a given visible-light camera include, but are not limited to, a Red-Green-Blue (RGB) camera, a Red-Green-Blue-Alpha (RGB-A) camera, a Red-Green-Blue-Depth (RGB-D) camera, a Red-Green-Blue-White (RGBW) camera, a Red-Yellow-Yellow-Blue (RYYB) camera, a Red-Green-Green-Blue (RGGB) camera, a Red-Clear-Clear-Blue (RCCB) camera, a Red-Green-Blue-Infrared (RGB-IR) camera, and a monochrome camera. Examples of a given depth camera include, but are not limited to, a Time-of-Flight (ToF) camera, a light detection and ranging (LiDAR) camera, a Red-Green-Blue-Depth (RGB-D) camera, a laser rangefinder, a stereo camera, a plenoptic camera, a ranging camera, a Sound Navigation and Ranging (SONAR) camera. It will be appreciated that any combination of various different types of cameras (for example, such as the at least one visible-light camera, the at least one IR camera, and the at least one depth camera) may be utilised in the tracking means. When different types of images captured by the various different types of tracking cameras are utilised, a location of user's eyes can be determined highly accurately, as results obtained from one type of image can be used to refine results obtained from another type of image. Herein, these different types of images constitute tracking data collected by the tracking means, and may be in the form of at least one of: visible-light images, IR images, depth images.

It will be appreciated that the at least one tracking camera is arranged to face the given user, to facilitate tracking of the location of the eyes of the given user. A relative location of the at least one tracking camera with respect to the image plane (namely, an imaginary plane on which virtual images are to be presented to the at least one user) of the LCD device is pre-known. This enables to determine the relative location of the eyes of the given user with respect to the image plane. Optionally, in this regard, when the tracking means are utilised to detect and/or follow the location of the eyes of the given user, a location of the eyes of the given user with respect to the at least one tracking camera is accurately known. Thus, the relative location of the eyes of the given user with respect to the image plane can be determined, based on the relative location of the at least one tracking camera with respect to the image plane, and the location of the eyes of the given user with respect to the at least one tracking camera. Such a determination may utilise a coordinate geometry-based technique and/or a trigonometry-based technique. It will be appreciated that the tracking means tracks both eyes of the given user with a significantly high accuracy and precision, such that an error in determining the relative location may, for example, be minimised to within a tolerance range of approximately (+/-) 8 millimetres.

Moreover, optionally, the at least one processor is configured to:
predict a future relative location of the first eye and the second eye of the at least one user with respect to the image plane of the LCD device, by utilising the tracking means; and
determine a plurality of future viewing directions from which the at least one virtual object is going to be viewed by the at least one user, based on the future relative location of the first eye and the second eye of the at least one user with respect to the image plane,
wherein the step of determining the colour values of the imaginary light rays, the step of generating the drive signals, the step of sending the drive signals and the step of controlling the corresponding portions of the active optical element are repeated for respective ones of the plurality of future viewing directions also.

This allows for displaying virtual images for the plurality of future viewing directions, apart from displaying the virtual images for the aforementioned plurality of viewing directions, as a cautionary measure.

This allows for displaying the virtual images for those viewing positions within the viewing zone that lie around the eyes of the at least one user. Thus, any sudden eye movements do not disrupt the 3D viewing experience of the at least one user. In other words, even if the relative location of the eyes of the at least one user changes abruptly, the system would still be displaying the virtual images for the plurality of future viewing directions (namely, for those viewing positions that lie around the eyes of the at least one user), thereby enabling the at least one user to continue viewing the 3D visual scene being presented. As a result, the 3D viewing experience of the user does not face any negative impact even from any latency in tracking the relative location of the eyes of the at least one user, as potential future relative locations are taken into consideration beforehand. It will be appreciated that the future relative location can be predicted using any suitable prediction technique that is well-known in the art.

Furthermore, optionally, the system further comprises an additional active optical element arranged on the optical path of the backlight unit, between the backlight unit and the active optical element, wherein the at least one processor is configured to:
determine a 3D bounding space within which a head of an individual one of the at least one user is likely to be present;
determine a roughly-estimated viewing direction from which the at least one virtual object is being viewed, based on a relative location of the 3D bounding space with respect to the image plane of the LCD device; and
control a corresponding portion of the additional active optical element, to initially direct the light rays having the colour values of said imaginary light ray along the roughly-estimated viewing direction,
wherein the corresponding portion of the active optical element is controlled, based on the roughly-estimated viewing direction along which the light rays are being initially directed by the additional active optical element, to re-direct said light rays along a viewing direction from which the at least one virtual object is being viewed by the individual one of the at least one user.

These steps can be performed for each user in case of multiple users. It will be appreciated that the 3D bounding space need not necessarily have a fixed shape and/or size. The 3D bounding space merely indicates an approximate location of the head of the individual one of the at least one user.

When the system is implemented as a 3D HUD inside a vehicle, the 3D bounding space could be determined, for example, based on a current setting of at least one adjustable seat parameter of a seat of the vehicle on which the individual one of the at least one user is sitting. Optionally, the at least one adjustable seat parameter comprises at least one of: a position of the seat, an orientation of a backrest of the seat, a height of a lower part of the seat from a floor of the vehicle, an orientation of the lower part of the seat, a position of a neck support of the seat, an orientation of the neck support, a curvature of a lumbar support of the seat. It will be appreciated that the at least one adjustable seat parameter is approximately indicative of a current position of the head of the individual one of the at least one user inside the vehicle, and thus, could be beneficially utilised for determining the 3D bounding space. In this regard, the system may further comprise at least one sensor that is employed to detect the current setting of the at least one adjustable seat parameter of the seat. Optionally, the at least one sensor comprises at least one of: an image sensor, a position sensor, an orientation sensor, a height sensor, a pressure sensor. As an example, the position sensor could be employed to detect the position of the seat and the position of the neck support. As another example, the orientation sensor could be employed to detect the orientation of the backrest, the orientation of the neck support, and the orientation of the lower part of the seat. As yet another example, the height sensor could be employed to detect the height of the lower part of the seat from the floor of the vehicle. As still another example, the pressure sensor could be employed to detect the curvature of the lumbar support. Such sensors are well-known in the art.

Once the 3D bounding space is determined, the roughly-estimated viewing direction from which the at least one virtual object is being viewed (by the individual one of the at least one user) can be determined. In this regard, the relative location of the 3D bounding space could be considered as a relative location of a centre of mass of the 3D bounding space.

A technical effect of initially directing the light rays (having the colour values of said imaginary light ray) along the roughly-estimated viewing direction (using the additional active optical element) is that the active optical element does not has to perform all the light bending on its own. This allows for a very precise control and re-directing of the collimated light rays towards the eyes of the individual one of the at least one user. Notably, in a case where a given user is located obliquely with respect to the image plane of the LCD device, the system is still capable of directing the light rays towards the given user, even with a relatively narrower light bending range for the active optical element.

Moreover, optionally, when the at least one user is a plurality of users, the at least one processor is configured to:
detect when eyes of at least one of the plurality of users are closed, or the at least one of the plurality of users is not looking towards the at least one virtual object being presented; and
when it is detected that the eyes of the at least one of the plurality of users are closed, or the at least one of the plurality of users is not looking towards the at least one virtual object, perform at least one of:
   skip determining those viewing directions from which the at least one virtual object is being viewed by the at least one of the plurality of users;
   skip determining colour values of imaginary light rays that originate from the at least one virtual object along those viewing directions from which the at least one virtual object is being viewed by the at least one of the plurality of users;
   skip generating drive signals to control at least one region of the LCD device to emit light rays having the colour values of said imaginary light rays;
   skip sending said drive signals to the LCD device;
   skip controlling at least one corresponding portion of the active optical element to direct the light rays having the colour values of said imaginary light rays along those viewing directions from which the at least one virtual object is being viewed by the at least one of the plurality of users.

Optionally, the tracking means is utilised to detect when the eyes of the at least one of the plurality of users are closed, or when the at least one of the plurality of users is not looking towards the at least one virtual object being presented. In this regard, the tracking data collected by the tracking means comprises a plurality of images of a given eye of a given user. The at least one processor is configured to: extract a plurality of features of the given eye from a given image; and identify at least one of: a pupil of the given eye, a curvature of an eyelid of the given eye, a position of an eyelash of the given eye, a shape of the given eye, a size of the given eye, based on the plurality of features. This allows to detect when the given eye of the given user is closed. This also allows to determine a gaze direction of the given eye, which, in turn, allows to detect when the given user is not looking towards the at least one virtual object being presented. Such eye-tracking is well-known in the art.

When it is detected that the eyes of the at least one of the plurality of users are closed, it means that the at least one of the plurality of users is not viewing the at least one virtual object being presented. Therefore, displaying of those virtual images that correspond to the first eye and the second eye of the at least one of the plurality of users can be skipped entirely. In this regard, the step of determining those viewing directions from which the at least one virtual object is being viewed by the at least one of the plurality of users can be skipped. Moreover, the step of determining the colour values of the imaginary light rays that originate from the at least one virtual object along said viewing directions can also be skipped. Additionally, the step of generating the drive signals (to control at least one region of the LCD device to emit light rays having the colour values of said imaginary light rays) and the step of sending said drive signals can also be skipped. Furthermore, the step of controlling at least one corresponding portion of the active optical element (namely, at least one portion of the active optical element that corresponds to the at least one region of the LCD device) to direct said light rays along said viewing directions can also be skipped. Advantageously, skipping the aforementioned steps potentially facilitates in saving processing resources and processing time of the at least one processor.

Moreover, as the system employs temporal multiplexing for displaying different virtual images to respective eyes of the at least one user, time slots that were previously allotted for displaying virtual images to the eyes of the at least one of the plurality of users can be utilised for a remainder of the plurality of users. Thus, a frame rate at which virtual images are to be displayed to the remainder of the plurality of users can be increased.

Alternatively or additionally, a resolution of the virtual images to be displayed to the remainder of the plurality of users can be increased, by employing additional temporal multiplexing. As an example, a given virtual image for a given user (from amongst the remainder of the plurality of users) can be divided into sub-images, wherein these sub-images can be displayed sequentially. This allows for significantly increasing the resolution of the given virtual image perceived by the given user.

Furthermore, optionally, the system further comprises an optical combiner arranged on the optical path of the LCD device and on an optical path of a real-world light field of a real-world environment. The optical combiner is employed to reflect the light rays having the colour values of said imaginary light ray towards a given eye of an individual one of the at least one user, whilst optically combining the real-world light field with the light rays having the colour values of said imaginary light ray.

The optical combiner can be implemented as at least a part of a windshield or other windows of the vehicle. By "at least a part", it is meant that the optical combiner can also be implemented as an entirety of the windshield or the other windows. This allows the system to be implemented as a 3D HUD in the vehicle. The optical combiner could be implemented as at least one of: a lens, a mirror, a semi-transparent mirror, a semi-transparent film, a semi-transparent flexible membrane, a prism, a beam splitter, an optical waveguide, a polarizer. Optical combiners are well-known in the art. Optionally, a tilt angle of the optical combiner with respect to the image plane of the LCD device lies in a range of 10 degrees and 75 degrees.

The present disclosure also relates to the method as described above. Various embodiments and variants disclosed above, with respect to the aforementioned first aspect, apply *mutatis mutandis* to the method.

Optionally, the method further comprises:
determining a relative location of a first eye and a second eye of at least one user with respect to an image plane of the LCD device, by utilising tracking means; and
determining a plurality of viewing directions from which the at least one virtual object is being viewed by the at least one user, based on the relative location of the first eye and the second eye of the at least one user with respect to the image plane,
wherein the given viewing direction and the different viewing directions are selected from amongst the plurality of viewing directions.

Moreover, optionally, the method further comprises:
predicting a future relative location of the first eye and the second eye of the at least one user with respect to the image plane of the LCD device, by utilising the tracking means; and
determining a plurality of future viewing directions from which the at least one virtual object is going to be viewed by the at least one user, based on the future relative location of the first eye and the second eye of the at least one user with respect to the image plane,
wherein the step of determining the colour values of the imaginary light rays, the step of generating the drive signals, the step of sending the drive signals and the step of controlling the corresponding portions of the active optical element are repeated for respective ones of the plurality of future viewing directions also.

Furthermore, optionally, the method further comprises:
determining a 3D bounding space within which a head of an individual one of the at least one user is likely to be present;
determining a roughly-estimated viewing direction from which the at least one virtual object is being viewed, based on a relative location of the 3D bounding space with respect to the image plane of the LCD device; and
controlling a corresponding portion of an additional active optical element arranged on the optical path of the backlight unit, between the backlight unit and the active optical element, to initially direct the light rays having the colour values of said imaginary light ray along the roughly-estimated viewing direction,
wherein the corresponding portion of the active optical element is controlled, based on the roughly-estimated viewing direction along which the light rays are being initially directed by the additional active optical element, to re-direct said light rays along a viewing direction from which the at least one virtual object is being viewed by the individual one of the at least one user.

Moreover, optionally, when the at least one user is a plurality of users, the method further comprises:
detecting when eyes of at least one of the plurality of users are closed, or the at least one of the plurality of users is not looking towards the at least one virtual object being presented; and
when it is detected that the eyes of the at least one of the plurality of users are closed, or the at least one of the plurality of users is not looking towards the at least one virtual object, performing at least one of:
   skipping the step of determining those viewing directions from which the at least one virtual object is being viewed by the at least one of the plurality of users;
   skipping the step of determining colour values of imaginary light rays that originate from the at least one virtual object along those viewing directions from which the at least one virtual object is being viewed by the at least one of the plurality of users;
   skipping the step of generating drive signals to control at least one region of the LCD device to emit light rays having the colour values of said imaginary light rays;
   skipping the step of sending said drive signals to the LCD device;
   skipping the step of controlling at least one corresponding portion of the active optical element to direct the light rays having the colour values of said imaginary light rays along those viewing directions from which the at least one virtual object is being viewed by the at least one of the plurality of users.

Furthermore, optionally, the method further comprises employing an optical combiner, arranged on an optical path of the LCD device and on an optical path of a real-world light field of a real-world environment, to reflect the light rays having the colour values of said imaginary light ray towards a given eye of an individual one of the at least one user, whilst optically combining the real-world light field with the light rays having the colour values of said imaginary light ray.

Moreover, optionally, the method further comprises diffusing the light rays in a vertical direction, by employing a one-directional beam-shaping light diffuser, wherein the one-directional beam-shaping light diffuser is arranged on an optical path of the LCD device and of the active optical element.

### DETAILED DESCRIPTION OF THE DRAWINGS

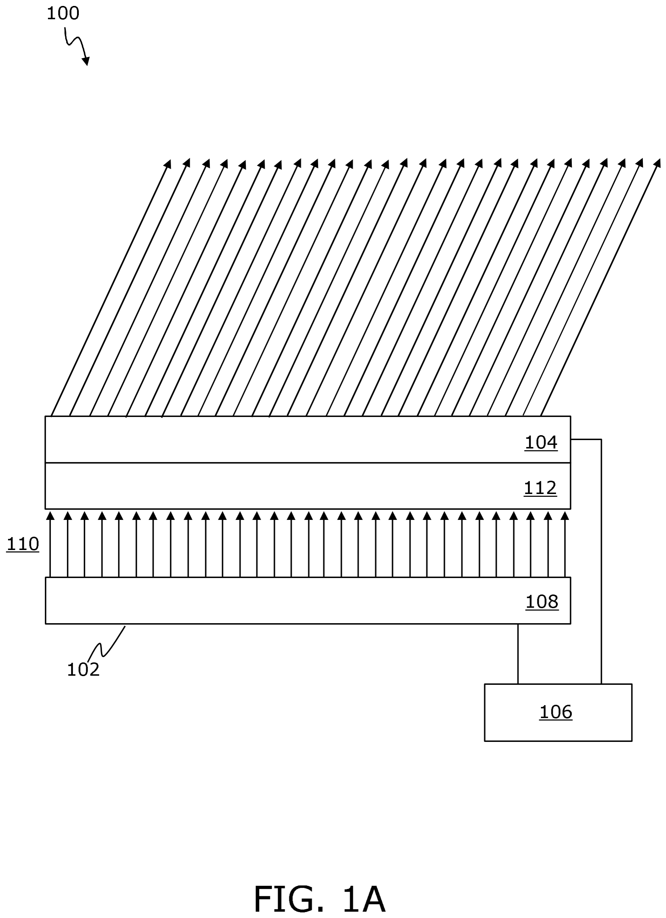

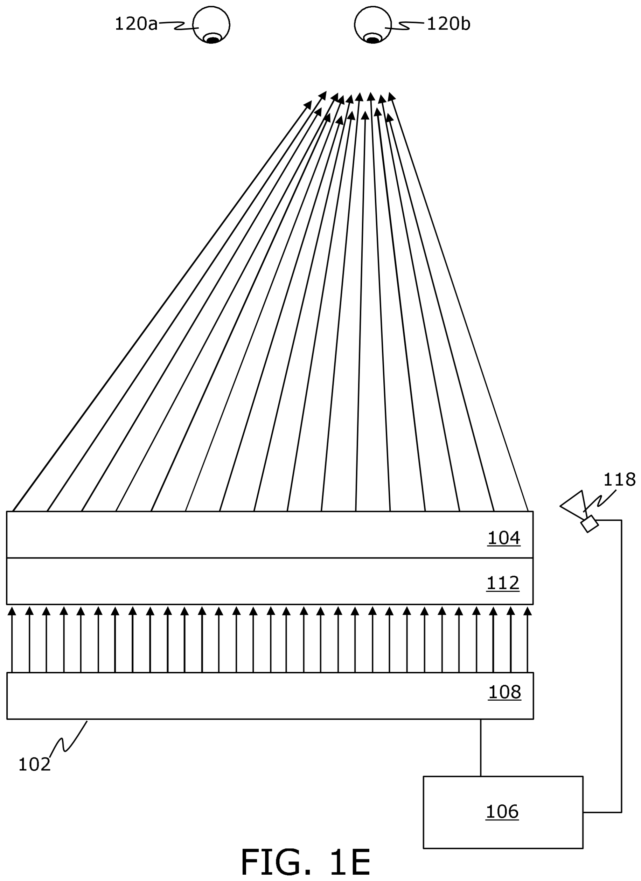

Referring to FIG. 1A, illustrated is a schematic diagram of a system **100** for facilitating a pseudo-holographic display using collimated backlight and dynamic beam steering, in accordance with an embodiment of the present disclosure. The system **100** comprises an LCD device **102,** an active optical element **104** and at least one processor (depicted as a processor **106).** The LCD device **102** comprises a backlight unit **108** that is configured to produce collimated light **110.** The LCD device **102** further comprises an LC layer **112,** a linear polarizer (not shown) arranged on an optical path of the LC layer **112,** and a drive circuit (not shown) employed to individually control a plurality of LC cells of the LC layer **112.** The active optical element **104** is arranged on an optical path of the backlight unit **108.** The processor **106** is configured to:
for a given region of the LCD device **102** and a given viewing direction, determine colour values of an imaginary light ray that originates from at least one virtual object along the given viewing direction and that is to be presented by the given region of the LCD device **102,** based on a 3D model of the at least one virtual object;
generate a drive signal to control the given region of the LCD device **102** to emit light rays having the colour values of said imaginary light ray;
send the drive signal to the LCD device **102;** and
control a corresponding portion of the active optical element **104,** to direct the light rays having the colour values of said imaginary light ray along the given viewing direction.

The collimated light rays **110** are converted into the light rays having the colour values of the imaginary rays by the LCD device **102.** FIG. 1A shows a simplified top view of the system **100,** wherein these light rays are shown to be directed towards a given viewing direction, for illustration purposes only. It will be appreciated that it is not necessary that light rays emitted by each of the plurality of regions of the LCD device is directed towards a same direction at a given time instant.

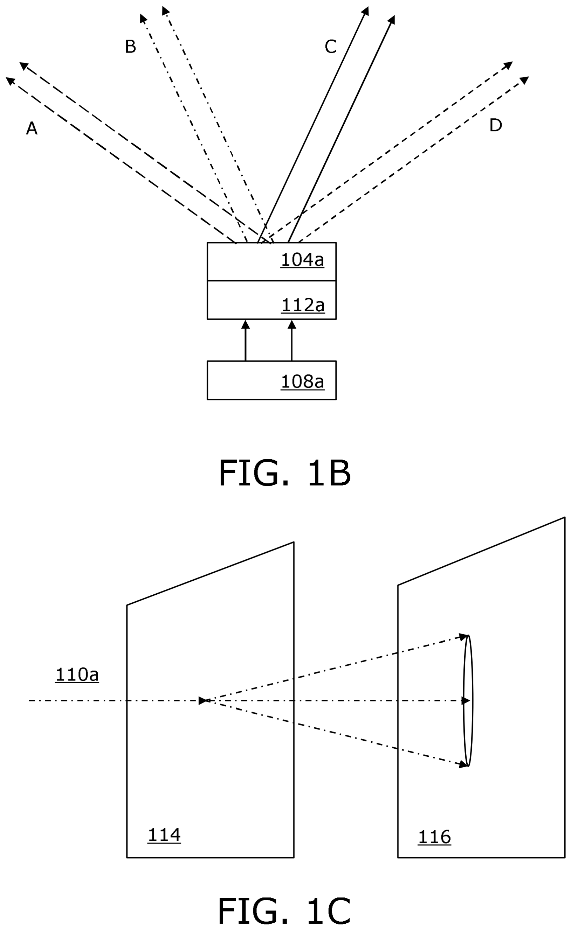

The step of determining colour values of imaginary light rays, the step of generating drive signals, the step of sending the drive signals and the step of controlling corresponding portions of the active optical element **104** are repeated for respective ones of different viewing directions, by employing temporal multiplexing. In this regard, FIG. 1B depicts a simplified top view illustrating how temporal multiplexing can be employed in the system **100,** in accordance with an embodiment of the present disclosure. With reference to FIG. 1B, a given region of the LCD device **102** is depicted as a corresponding portion **108a** of the backlight unit **108** and a corresponding portion **112a** of the LC layer **112.** A corresponding portion **104a** of the active optical element **104** lies on an optical path of the corresponding portion **108a** of the backlight unit **108.** Light rays emitted by the given region of the LCD device **102** are shown to be directed by the corresponding portion **104a** of the active optical element **104** along respective ones of different viewing directions **A, B, C** and **D,** by employing temporal multiplexing. This allows for producing a pseudo-holographic display having a true 3D light field, thereby allowing at least one virtual object to be displayed at freely-adjustable optical distances with a true parallax effect even without a need for any head or eye tracking.

FIG. 1C depicts a one-directional beam-shaping light diffuser **114** that can be employed to diffuse the light rays in a vertical direction, namely, a vertical dimension of a viewing zone **116** of the system **100,** in accordance with an embodiment of the present disclosure. The one-directional beam-shaping light diffuser **114** is arranged on an optical path of the LCD device **102** and of the active optical element **104.** When light rays **110a** pass through the one-directional beam-shaping light diffuser **114,** the light rays are diffused in the vertical direction, as shown. This allows for increasing a size of the viewing zone **116.**

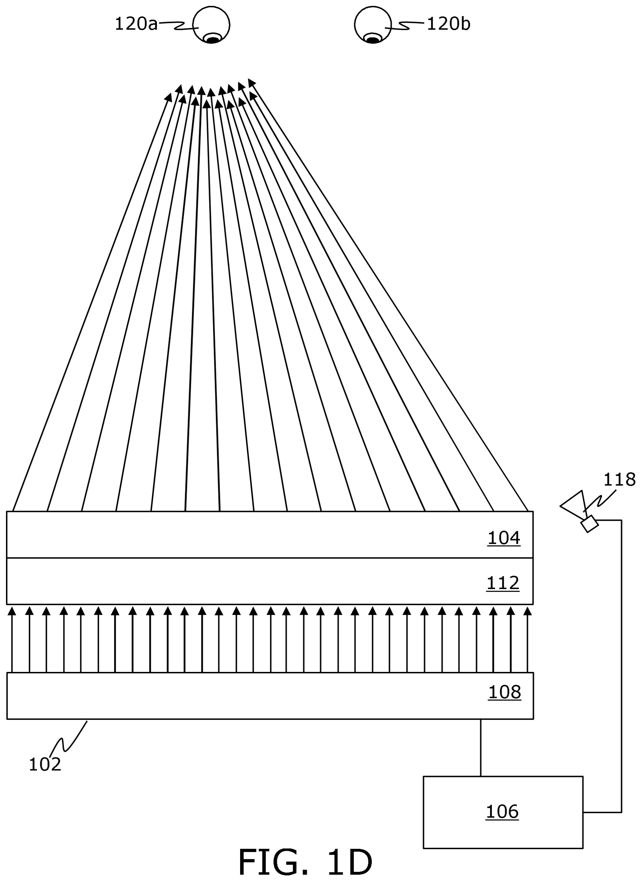

FIG. 1D-1E depict a specific implementation of the system **100,** in accordance with an embodiment of the present disclosure. Optionally, in this regard, the system **100** further comprises tracking means **118,** wherein the processor **106** is configured to:
determine a relative location of a first eye **120a** and a second eye **120b** of at least one user with respect to an image plane of the LCD device **102,** by utilising the tracking means **118;** and
determine a plurality of viewing directions from which the at least one virtual object is being viewed by the at least one user, based on the relative location of the first eye **120a** and the second eye **120b** of the at least one user with respect to the image plane.

The given viewing direction and the different viewing directions **A, B, C,** and **D** are selected from amongst the plurality of viewing directions. As mentioned earlier, the dynamic beam steering could be beneficially performed at a finer granular level, based on a location of an individual one of the plurality of regions within the LCD device **102.** Notably, an entirety of the LCD device **102** spans a certain field of view with respect to a given eye **120a-120b** of an individual one of the at least one user. Therefore, in order to display a given virtual image, respective viewing directions for different regions of the LCD device **102** are different even for the given eye **120a-120b** of the individual one of the at least one user, as shown in FIGs. 1D-1E.

It may be understood by a person skilled in the art that FIGs. 1A, 1B, 1C and 1D-1E merely depict different example implementations (out of many possible implementations) of the system **100,** for sake of clarity, which should not unduly limit the scope of the claims herein. It is to be understood that the specific implementation of the system **100** is not to be construed as limiting it to specific numbers or types of LCD devices, active optical elements, processors, light diffusers, and tracking means. A person skilled in the art will recognize many variations, alternatives, and modifications of embodiments of the present disclosure.

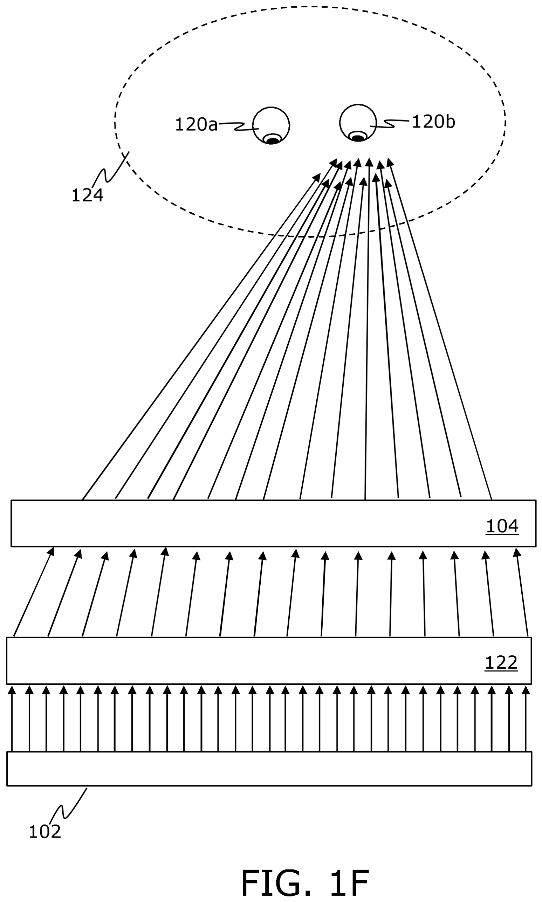

FIG. 1F depicts an additional implementation of the system **100,** in accordance with an embodiment of the present disclosure. In this additional implementation, the system **100** further comprises an additional active optical element **122** arranged on the optical path of the backlight unit **108,** between the backlight unit **108** and the active optical element **104.** The processor **108** is configured to:
determine a 3D bounding space **124** within which a head of an individual one of the at least one user is likely to be present;
determine a roughly-estimated viewing direction from which the at least one virtual object is being viewed, based on a relative location of the 3D bounding space **124** with respect to the image plane of the LCD device **102;** and
control a corresponding portion of the additional active optical element **122,** to initially direct the light rays having the colour values of said imaginary light ray along the roughly-estimated viewing direction,
wherein the corresponding portion of the active optical element **104** is controlled, based on the roughly-estimated viewing direction along which the light rays are being initially directed by the additional active optical element **122,** to re-direct said light rays along a viewing direction from which the at least one virtual object is being viewed by the individual one of the at least one user.

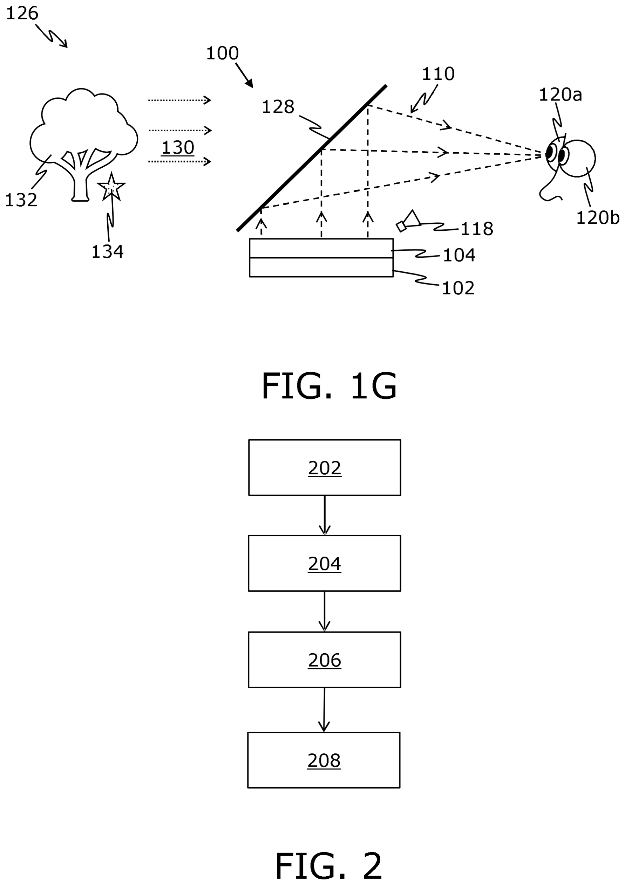

Referring to FIG. 1G, illustrated is an exemplary environment in which the system **100** can be employed, in accordance with an embodiment of the present disclosure. The system **100** is shown to be employed in a real-world environment **126.** The system **100** further comprises an optical combiner **128.** The optical combiner **128** is shown to be arranged on an optical path of the LCD device **102** and on an optical path of a real-world light field **130** of the real-world environment **126.** In the real-world environment **126,** there are one or more real-world objects, depicted as a real-world object **132** (shown as a tree, for illustration purposes only).

The optical combiner **128** is employed to reflect the light rays **110** having the colour values of said imaginary light ray towards a given eye **120a-120b** of an individual one of the at least one user, whilst optically combining the real-world light field **130** with the light rays **110** having the colour values of said imaginary light ray. This allows for presenting the at least one virtual object, depicted as a virtual object **134** (shown as a star, for illustration purposes only).

FIGs. 1A-1G are merely examples, which should not unduly limit the scope of the claims herein. A person skilled in the art will recognize many variations, alternatives, and modifications of embodiments of the present disclosure.

Referring to FIG. 2, illustrated are steps of a method for facilitating a pseudo-holographic display using collimated backlight and dynamic beam steering, in accordance with an embodiment of the present disclosure. At step **202,** for a given region of an LCD device and a given viewing direction, determining colour values of an imaginary light ray that originates from at least one virtual object along the given viewing direction and that is to be presented by the given region of the LCD device, based on a 3D model of the at least one virtual object. The LCD device comprises a backlight unit that is configured to produce collimated light rays. At step **204,** a drive signal is generated to control the given region of the LCD device to emit light rays having the colour values of said imaginary light ray. At step **206,** the drive signal is sent to the LCD device. At step **208,** a corresponding portion of an active optical element arranged on an optical path of the backlight unit is controlled, to direct the light rays having the colour values of said imaginary light ray along the given viewing direction.

Steps **202, 204, 206,** and **208** are performed for individual ones of a plurality of regions of the LCD device, and are repeated for respective ones of different viewing directions, by employing temporal multiplexing.

The aforementioned steps are only illustrative and other alternatives can also be provided where one or more steps are added, one or more steps are removed, or one or more steps are provided in a different sequence without departing from the scope of the claims herein.

## Claims

1. A system (100) comprising:
a liquid crystal display (LCD) device (102) comprising a backlight unit (108) that is configured to produce collimated light rays (110);
an active optical element (104) arranged on an optical path of the backlight unit; and
at least one processor (106) configured to:
for a given region of the LCD device and a given viewing direction, determine colour values of an imaginary light ray that originates from at least one virtual object (134) along the given viewing direction and that is to be presented by the given region of the LCD device, based on a three-dimensional (3D) model of the at least one virtual object;
generate a drive signal to control the given region of the LCD device to emit light rays having the colour values of said imaginary light ray;
send the drive signal to the LCD device; and
control a corresponding portion (104a) of the active optical element, to direct the light rays having the colour values of said imaginary light ray along the given viewing direction,
wherein the step of determining colour values of imaginary light rays, the step of generating drive signals, the step of sending the drive signals and
the step of controlling corresponding portions of the active optical element are repeated for respective ones of different viewing directions (A, B, C, D), by employing temporal multiplexing.

2. The system (100) of claim 1, further comprising tracking means (118), wherein the at least one processor (106) is configured to:
determine a relative location of a first eye (120a) and a second eye (120b) of at least one user with respect to an image plane of the LCD device (102), by utilising the tracking means; and
determine a plurality of viewing directions (A, B, C, D) from which the at least one virtual object (134) is being viewed by the at least one user, based on the relative location of the first eye and the second eye of the at least one user with respect to the image plane,
wherein the given viewing direction and the different viewing directions are selected from amongst the plurality of viewing directions.

3. The system (100) of claim 2, wherein the at least one processor (106) is configured to:
predict a future relative location of the first eye (120a) and the second eye (120b) of the at least one user with respect to the image plane of the LCD device (102), by utilising the tracking means (118); and
determine a plurality of future viewing directions (A, B, C, D) from which the at least one virtual object (134) is going to be viewed by the at least one user, based on the future relative location of the first eye and the second eye of the at least one user with respect to the image plane,
wherein the step of determining the colour values of the imaginary light rays, the step of generating the drive signals, the step of sending the drive signals and the step of controlling the corresponding portions (104a) of the active optical element (104) are repeated for respective ones of the plurality of future viewing directions also.

4. The system (100) of any of claims 2-3, wherein the at least one user is a plurality of users, and wherein the at least one processor (106) is configured to:
detect when eyes of at least one of the plurality of users are closed, or the at least one of the plurality of users is not looking towards the at least one virtual object (134) being presented; and
when it is detected that the eyes of the at least one of the plurality of users are closed, or the at least one of the plurality of users is not looking towards the at least one virtual object, perform at least one of:
skip determining those viewing directions (A, B, C, D) from which the at least one virtual object is being viewed by the at least one of the plurality of users;
skip determining colour values of imaginary light rays that originate from the at least one virtual object along those viewing directions from which the at least one virtual object is being viewed by the at least one of the plurality of users;
skip generating drive signals to control at least one region of the LCD device (102) to emit light rays having the colour values of said imaginary light rays;
skip sending said drive signals to the LCD device;
skip controlling at least one corresponding portion (104a) of the active optical element (104) to direct the light rays having the colour values of said imaginary light rays along those viewing directions from which the at least one virtual object is being viewed by the at least one of the plurality of users.

5. The system (100) of any of claims 2-4, further comprising an additional active optical element (122) arranged on the optical path of the backlight unit (108), between the backlight unit and the active optical element (104), wherein the at least one processor (106) is configured to:
determine a 3D bounding space (124) within which a head of an individual one of the at least one user is likely to be present;
determine a roughly-estimated viewing direction from which the at least one virtual object (134) is being viewed, based on a relative location of the 3D bounding space with respect to the image plane of the LCD device (102); and
control a corresponding portion of the additional active optical element, to initially direct the light rays having the colour values of said imaginary light ray along the roughly-estimated viewing direction,
wherein the corresponding portion of the active optical element is controlled, based on the roughly-estimated viewing direction along which the light rays are being initially directed by the additional active optical element, to re-direct said light rays along a viewing direction from which the at least one virtual object is being viewed by the individual one of the at least one user.

6. The system (100) of any of claims 2-5, further comprising an optical combiner (128) arranged on an optical path of the LCD device (102) and on an optical path of a real-world light field (130) of a real-world environment (126), wherein the optical combiner is employed to reflect the light rays having the colour values of said imaginary light ray towards a given eye (120a-120b) of an individual one of the at least one user, whilst optically combining the real-world light field with the light rays having the colour values of said imaginary light ray.

7. The system (100) of any of the preceding claims, further comprising a one-directional beam-shaping light diffuser (114) arranged on an optical path of the LCD device (102) and of the active optical element (104), wherein the one-directional beam-shaping light diffuser is employed to diffuse the light rays in a vertical direction.

8. A method comprising:
for a given region of a liquid crystal display (LCD) device (102) and a given viewing direction, determining colour values of an imaginary light ray that originates from at least one virtual object (134) along the given viewing direction and that is to be presented by the given region of the LCD device, based on a three-dimensional (3D) model of the at least one virtual object, wherein the LCD device comprises a backlight unit (108) that is configured to produce collimated light rays (110);
generating a drive signal to control the given region of the LCD device to emit light rays having the colour values of said imaginary light ray;
sending the drive signal to the LCD device; and
controlling a corresponding portion (104a) of an active optical element (104) arranged on an optical path of the backlight unit, to direct the light rays having the colour values of said imaginary light ray along the given viewing direction,
wherein the step of determining colour values of imaginary light rays, the step of generating drive signals, the step of sending the drive signals and the step of controlling corresponding portions of the active optical element are repeated for respective ones of different viewing directions (A, B, C, D), by employing temporal multiplexing.

9. The method of claim 8, further comprising:
determining a relative location of a first eye (120a) and a second eye (120b) of at least one user with respect to an image plane of the LCD device (102), by utilising tracking means (118); and
determining a plurality of viewing directions (A, B, C, D) from which the at least one virtual object (134) is being viewed by the at least one user, based on the relative location of the first eye and the second eye of the at least one user with respect to the image plane,
wherein the given viewing direction and the different viewing directions are selected from amongst the plurality of viewing directions.

10. The method of claim 9, further comprising:
predicting a future relative location of the first eye (120a) and the second eye (120b) of the at least one user with respect to the image plane of the LCD device (102), by utilising the tracking means (118); and
determining a plurality of future viewing directions (A, B, C, D) from which the at least one virtual object (134) is going to be viewed by the at least one user, based on the future relative location of the first eye and the second eye of the at least one user with respect to the image plane,
wherein the step of determining the colour values of the imaginary light rays, the step of generating the drive signals, the step of sending the drive signals and the step of controlling the corresponding portions (104a) of the active optical element (104) are repeated for respective ones of the plurality of future viewing directions also.

11. The method of any of claims 9-10, wherein the at least one user is a plurality of users, and wherein the method further comprises:
detecting when eyes of at least one of the plurality of users are closed, or the at least one of the plurality of users is not looking towards the at least one virtual object (134) being presented; and
when it is detected that the eyes of the at least one of the plurality of users are closed, or the at least one of the plurality of users is not looking towards the at least one virtual object, performing at least one of:
skipping the step of determining those viewing directions (A, B, C, D) from which the at least one virtual object is being viewed by the at least one of the plurality of users;
skipping the step of determining colour values of imaginary light rays that originate from the at least one virtual object along those viewing directions from which the at least one virtual object is being viewed by the at least one of the plurality of users;
skipping the step of generating drive signals to control at least one region of the LCD device (102) to emit light rays having the colour values of said imaginary light rays;
skipping the step of sending said drive signals to the LCD device;
skipping the step of controlling at least one corresponding portion (104a) of the active optical element (104) to direct the light rays having the colour values of said imaginary light rays along those viewing directions from which the at least one virtual object is being viewed by the at least one of the plurality of users.

12. The method of any of claims 9-11, further comprising:
determining a 3D bounding space (124) within which a head of an individual one of the at least one user is likely to be present;
determining a roughly-estimated viewing direction from which the at least one virtual object (134) is being viewed, based on a relative location of the 3D bounding space with respect to the image plane of the LCD device; and
controlling a corresponding portion of an additional active optical element (122) arranged on the optical path of the backlight unit (108), between the backlight unit and the active optical element, to initially direct the light rays having the colour values of said imaginary light ray along the roughly-estimated viewing direction,
wherein the corresponding portion of the active optical element is controlled, based on the roughly-estimated viewing direction along which the light rays are being initially directed by the additional active optical element, to re-direct said light rays along a viewing direction from which the at least one virtual object is being viewed by the individual one of the at least one user.

13. The method of any of claims 9-12, further comprising employing an optical combiner (128), arranged on an optical path of the LCD device (102) and on an optical path of a real-world light field (130) of a real-world environment (126), to reflect the light rays having the colour values of said imaginary light ray towards a given eye (120a-120b) of an individual one of the at least one user, whilst optically combining the real-world light field with the light rays having the colour values of said imaginary light ray.

14. The method of any of claims 8-13, further comprising diffusing the light rays in a vertical direction, by employing a one-directional beam-shaping light diffuser (114), wherein the one-directional beam-shaping light diffuser is arranged on an optical path of the LCD device (102) and of the active optical element (104).
